# EUROPÄISCHE PATENTANMELDUNG

(11) **EP 0 933 854 A1**
(43) Veröffentlichungstag der Anmeldung: **04.08.1999**
(21) Anmeldenummer: 98123352.1
(22) Anmeldetag: 08.12.1998
(51) Int. Cl.: H02G 3/22, F16L 5/02

(54) **Wanddurchführung zum Einsetzen in ein durch eine Mauer hindurchführendes Durchgangsloch**

(30) Priorität: 03.02.1998 DE 19803958
(71) Anmelder: Hauff-Technik GmbH & Co. KG, 89542 Herbrechtingen (DE)
(72) Erfinder: Kurz, Ralf, 89537 Hohenmemmingen (DE)
(74) Vertreter: Dr. Weitzel & Partner

(57) **Zusammenfassung**

Die Erfindung betrifft eine Wanddurchführung zum Einsetzen in ein durch eine Mauer hindurchführendes Durchgangsloch, mit einem in eingesetztem Zustand die Mauer durchdringenden Rohr, mit zwei beidseitig der Mauer angeordneten und gegen die Mauer preßbaren Flanschen, von denen einer am Rohr festlegbar und der andere auf das Rohr aufschiebbar und über eine Spanneinrichtung gegen die Wand preßbar ist.

Die Erfindung ist dadurch gekennzeichnet,
daß die Spanneinrichtung eine Spannbuchse und eine Spannhülse umfaßt, die ihrerseits unter Veränderung der axialen Länge der Spanneinrichtung miteinander verschraubbar sind, daß das Rohr eine Mehrzahl von Umfangsnuten aufweist, daß ein Spannring in axialer oder achssenkrechter Richtung auf das Rohr aufschiebbar und in eine der Umfangsnuten einschnappbar ist, und daß die Spanneinrichtung am Spannring abgestützt ist.

## Beschreibung

Die Erfindung betrifft eine Wanddurchführung zum Einsetzen in ein durch eine Mauer hindurchführendes Durchgangsloch gemäß dem Oberbegriff von Anspruch 1. Eine solche Wanddurchführung dient dazu, Leitungen oder Kabel zu umschließen und zu schützen. Solche Vorrichtungen, auch "Hauseinführungen" genannt, umfassen ein Rohr, das durch den Mauerdurchbruch - im allgemeinen ein kreisförmiges Loch - hindurchgeführt wird. Auf das Rohr sind zwei Flansche aufschiebbar, und zwar jeweils einer auf jeder Mauerseite. Diese Flansche sind gegeneinander verspannbar, so daß sie mit einer gewissen Anpreßkraft an der betreffenden Mauerfläche anliegen. Dabei ist der eine Flansch im allgemeinen von vorneherein auf dem Rohr fixiert, so daß er sich nicht in axialer Richtung verschieben läßt. Der andere Flansch hingegen ist gegen die betreffende Mauerfläche anstellbar. Zum Anstellen und Anpressen dieses Flansches dient eine Spanneinrichtung. Diese bekannte Spanneinrichtung besitzt zwei Klötze, deren jeder auf dem Rohr reitet, und die durch Schrauben lose miteinander verbunden sind, so daß die gesamte Spanneinrichtung entlang der Rohr-Längsachse verschiebbar ist. Zum Zwecke des Verspannens wird die Spanneinrichtung an den zu spannenden Flansch herangeschoben. Sodann werden die beiden Klötze durch die genannten Schrauben miteinander fest verschraubt, so daß die Spanneinrichtung kraftschlüssig auf dem Rohr fixiert ist.

Die Spanneinrichtung umfasst ferner Spannschrauben, die parallel zur Rohr-Längsachse angeordnet sind. Die Spannschrauben wandern beim Verdrehen gegen den zu spannenden Flansch, stützen sich dort ab und bringen damit eine Spannkraft auf den Flansch auf, so daß dieser mit der gewünschten Anpreßkraft an seiner Mauerfläche anliegt.

Eine solche Hauseinführung mit der genannten Spanneinrichtung hat sich bisher bewährt. Der Erfinder hat jedoch erkannt, daß eine solche Vorrichtung noch verbesserungsfähig ist. So hat er festgestellt, daß die durch Verschrauben aufbringbare Kraft - über den Rohrumfang gesehen - nicht genau gleich groß ist. Es wird immer die eine Schraube eine stärkere Anpreßkraft auf den Flansch aufbringen, als eine andere.

DE 40 04 827 A1 sowie DE 296 01 567 U1 offenbaren jeweils eine Wanddurchführung zum Einsetzen in ein durch eine Mauer hindurchführendes Durchgangsloch, mit einem in eingesetztem Zustand die Mauer durchdringenden Rohr, mit zwei Flanschen, die beidseitig auf das Rohr aufbringbar sind und mit einer das Rohr umschließenden Spanneinrichtung. Diese Wanddurchführungen sind nicht für alle Anwendungsfälle geeignet. Außerdem sind sie verhältnismäßig aufwendig in der Herstellung und nicht besonders bedienungsfreundlich.

Der Erfindung liegt die Aufgabe zugrunde, eine Wanddurchführung zu schaffen, bei der die durch Verschrauben aufbringbare Kraft - über den Rohrumfang gesehen - gleich groß ist, die kostengünstig herstellbar und leicht handhabbar ist.

Diese Aufgabe wird durch die Merkmale der unabhängigen Ansprüche gelöst. Mit einer solchen Vorrichtung wird sichergestellt, daß die auf den Flansch aufgebrachte Kraft stets gleich groß ist, über den Rotorumfang gesehen. Ferner ist die erfindungsgemäße Spanneinrichtung kostengünstig in der Herstellung. Montage und Demontage gehen sehr leicht vor sich, da die Arretierung der Spanneinrichtung sehr einfach ist. Es brauchen keine Spannschrauben angezogen zu werden. Die Vorrichtung weist weniger Einzelteile auf, als bekannte Vorrichtungen. Sie benötigt außerdem weniger Bauraum.

Die Erfindung ist anhand der Zeichnungen näher erläutert. Daran ist im einzelnen folgendes dargestellt:
- Figur 1: zeigt eine erfindungsgemäße Vorrichtung in eingebautem Zustand.
- Figur 2: zeigt einen Ausschnitt aus Figur 1.
- Figur 3: zeigt den Klemmring zum Arretieren der Spanneinrichtung.

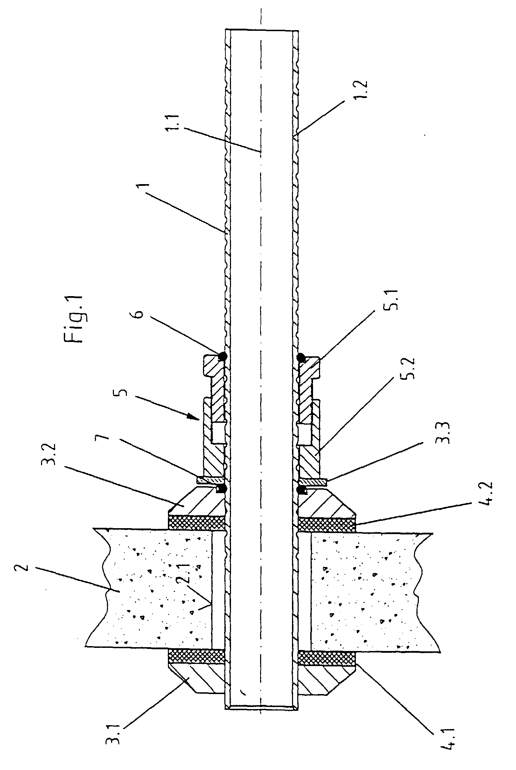

Die in Figur 1 dargestellte Vorrichtung weist ein Rohr 1 auf. Dieses ist durch eine Mauer 2 hindurchgeführt, und zwar durch eine zylindrische Bohrung 2.1 in der Mauer 2.

Auf dem Rohr 1 sitzen drei Flansche 3.1, 3.2, 3.3. Flansch 3.1 ist auf Rohr 1 fixiert, beispielsweise durch Verschweißen oder durch andere hier nicht dargestellte Mittel. Flansch 3.2 + 3.3 sind auf Rohr 1 zunächst, d.h. vor seiner Montage, in Richtung der Rohr-Längsachse 1.1 frei verschiebbar. Zwischen den Flanschen 3.1, 3.2 und den betreffenden Außenflächen der Mauer 2 finden sich ringförmige Dichtscheiben 4.1, 4.2.

Man erkennt ferner eine Spanneinrichtung 5. Diese umfaßt eine Spannbuchse 5.1 sowie eine Spannhülse 5.2. Spannbuchse 5.1 und Spannhülse 5.2 sind ineinander verschraubt. Durch gegenseitiges Verdrehen läßt sich die Gesamtlänge der Einspanneinrichtung 5 verändern.

### Entscheidende Elemente sind die folgenden:

Das Rohr 1.1 ist mit einer Vielzahl von Ringnuten 1.2 versehen. Diese verlaufen in Umfangsrichtung. Ferner ist ein Klemmring 6 vorgesehen. Dieser läßt sich in jede beliebige der genannten Nuten 1.2 verbringen. Er ist derart gestaltet und aus einem solchen Material hergestellt, daß er in der betreffenden Nut 1.2 verbleibt, und zwar auch dann, wenn ein gewisser axialer Schub auf ihn aufgebracht wird.

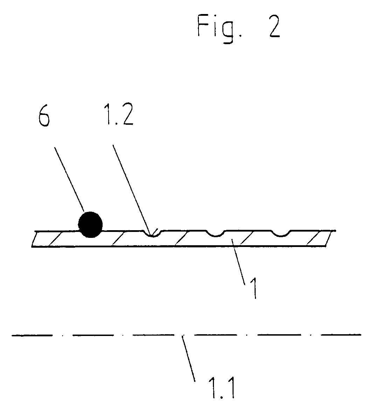

Figur 2 zeigt in vergrößerter Darstellung den Klemmring 6, der in einer von zahlreichen Nuten 1.2 des Rohres 1 sitzt.

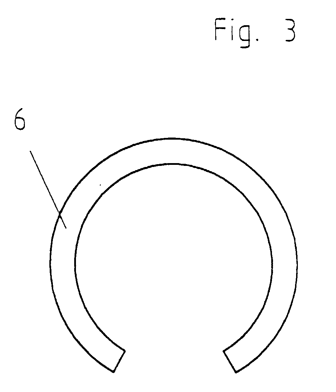

Im vorliegenden Falle besteht der Klemmring aus Kunststoff. Er ist nicht geschlossen, sondern bildet nur etwa einen Dreiviertelkreis - siehe Figur 3. Aufgrund dieser Gestaltung kann der Ring senkrecht zur Rohrachse 1.1 auf das Rohr aufgesetzt und in eine Nut 1.1 eingesetzt werden. In eingesetztem Zustand liegt er stramm an der Laibung der betreffenden Nut an. Es ist aber auch denkbar, den Ring 6 als Vollring auszubilden. In diesem Falle muß er in Längsrichtung auf das Rohr 1 aufgeschoben und entlang der Rohrachse 1.1 verschoben werden, bis er an der Spanneinrichtung 5 anliegt und dort in einer Nut 1.2 liegt.

Nach dem Aufbringen des Ringes 6 wird die Spanneinrichtung 5 verspannt, und zwar durch gegenseitiges Verdrehen von Spannbuchse 5.1 und Spannhülse 5.2. Spannhülse 5.2. Diese drückt beim Verspannen der Spanneinrichtung 5 zunächst gegen Scheibe 3.3. und dann gegen mindestens einen Dichtungsring 7, so daß sich dieser verformt, und so daß das Ende 5.2 an der Außenfläche des Flansches 3.3 anliegt und diesen mit 3.2 gegen die Mauer 2 andrückt.

## Patentansprüche

1. Wanddurchfuhrung zum Einsetzen in ein durch eine Mauer hindurchführendes Durchgangsloch, mit einem in eingesetztem Zustand die Mauer durchdringenden Rohr, mit zwei beidseitig der Mauer angeordneten und gegen die Mauer preßbaren Flanschen, von denen einer am Rohr festlegbar und der andere auf das Rohr aufschiebbar und über eine Spanneinrichtung gegen die Wand preßbar ist,
dadurch gekennzeichnet,
daß die Spanneinrichtung eine Spannbuchse (5.1) und eine Spannhülse (5.2) umfaßt, die ihrerseits unter Veränderung der axialen Länge der Spanneinrichtung (5) miteinander verschraubbar sind, daß das Rohr (1) eine Mehrzahl von Umfangsnuten (1.2) aufweist, daß ein Spannring (6) in axialer oder achssenkrechter Richtung auf das Rohr (1) aufschiebbar und in eine der Umfangsnuten (1.2) einschnappbar ist, und daß die Spanneinrichtung (5) am Spannring (6) abgestützt ist.

2. Wanddurchführung nach Anspruch 1, dadurch gekennzeichnet, daß der Spannring (6) die Gestalt eines offenen Kreisbogens hat.
